# EUROPÄISCHE PATENTSCHRIFT

(11) **EP 2 406 190 B1**
(45) Veröffentlichungstag und Bekanntmachung des Hinweises auf die Patenterteilung: **03.04.2013**
(21) Anmeldenummer: 10704343.2
(22) Anmeldetag: 29.01.2010
(51) Int. Cl.: C02F 11/10, C02F 11/12, F26B 23/00, F26B 23/10

(54) **VERFAHREN UND ANLAGE ZUR VERWERTUNG VON BIOMASSE SOWIE BLOCKHEIZKRAFTWERK**
METHOD AND SYSTEM FOR RECLAMATION OF BIOMASS AND BLOCK HEATING PLANT
PROCÉDÉ ET INSTALLATION DE VALORISATION D'UNE BIOMASSE, ET CENTRALE THERMIQUE EN MONTAGE-BLOC

(30) Priorität: 13.03.2009 DE 102009012668
(43) Veröffentlichungstag der Anmeldung: 18.01.2012
(73) Patentinhaber: E.ON Engineering GmbH, 45896 Gelsenkirchen (DE)
(72) Erfinder: KROIS, Bernd Johannes, 46286 Dorsten-Lembeck (DE)
(74) Vertreter: Cohausz & Florack
(86) Internationale Anmeldenummer: PCT/EP2010/051063
(87) Internationale Veröffentlichungsnummer: WO 2010/102854

(56) Entgegenhaltungen:
- EP-A1- 0 463 379
- EP-A1- 1 477 461
- WO-A1-2007/147181
- Amandus Kahl GmbH & Co KG: "BioLog - Vom Acker in den Tank - Schlussbericht" 2008, Seiten 1-33, XP002584959 Gefunden im Internet: URL:http://www.fnr-server.de/ftp/pdf/beric hte/22031805.pdf> [gefunden am 2010-05-28]

## Beschreibung

Die Erfindung betrifft ein Verfahren zur Verwertung biogener Masse, insbesondere von Klärschlamm, bei dem das zu verwertende Gut zunächst getrocknet und anschließend zum Zwecke der Erzeugung von Pyrolysegas in einem Pyrolysereaktor thermisch zersetzt wird. Ferner betrifft die Erfindung eine Anlage zur Verwertung biogener Masse, insbesondere von Klärschlamm, umfassend eine Trocknungsvorrichtung und einen in Transportrichtung des Gutes hinter der Trocknungsvorrichtung angeordneten Pyrolysereaktor zur Erzeugung von Pyrolysegas aus dem getrockneten Gut.

Die Verwertung biogener Masse, insbesondere ihr Einsatz als alternativer Energieträger, ist seit Jahren Gegenstand der intensiven Forschung. Unter den Oberbegriff "biogene Masse" fällt dabei die eigentliche "Biomasse" gemäß Biomasseverordnung, d.h. Pflanzenreste, Abfälle und Nebenprodukte pflanzlicher und tierischer Herkunft, Bioabfälle, Altholz usw., als auch zurückgeführte Prozessabfälle sowie kommunale und industrielle Klärschlämme.

Insbesondere die auf verschiedene Weise mögliche Verwertung und Entsorgung von Klärschlämmen hat sich in letzter Zeit als problematisch herausgestellt. Prinzipiell besteht eine Möglichkeit der Verwertung in der Ausbringung der Klärschlämme auf Ackerflächen (landwirtschaftliche Verwertung). Obwohl dies nach den Bestimmungen der Klärschlammverordnung zulässig ist, ist die Verwendung als Düngemittel langfristig mit einer Verunreinigung und Belastung der Böden verbunden, wobei sich die aus auf diesen Böden angebauten Pflanzen erzeugten Nahrungsmittel sich mit Schadstoffen anreichern. Ferner ist die Ausbringung von Klärschlämmen auf Ackerflächen stets mit einem hohen Transportaufkommen verbunden, so dass als weiterer Nachteil hohe Kosten und CO₂-Emissionen hinzutreten.

Die Mitverbrennung von Klärschlämmen in zentralen Kraftwerken ist zwar grundsätzlich möglich, ist jedoch ebenfalls wieder mit hohem Transportaufwand verbunden, da der Klärschlamm mit einem Feststoffanteil von lediglich ca. 25% (die restlichen 75% sind Feuchtigkeit) zum Kraftwerk transportiert werden muss. Dort ist er einer aufwändigen Trocknungsprozedur zu unterziehen, die derart energieintensiv ist, dass die bei der anschließenden Mitverbrennung des getrockneten Klärschlamms zusätzlich gewonnene Wärmeenergie hierfür mehr oder weniger vollständig aufgezehrt wird. Für den Energieversorger entstehen somit energetisch keinerlei Vorteile.

Auch die Verbrennung von Klärschlamm in dezentralen Verbrennungsanlagen führt hinsichtlich reduzierter Prozesskosten nur zu geringen Erfolgen. Zwar sind in der Regel die Transportwege verkürzt, jedoch ist die aus dem Verbrennungsprozess gewonnene Energie gegenüber der für die Trocknung aufzuwendenden Energie noch zu gering. Ferner muss der Verbrennungsprozess durch Zusatzbrennstoffe aufrechterhalten werden, wobei annähernd ausschließlich diese zu einer letztlich positiven Energiebilanz beitragen.

Eine weitere Möglichkeit der Verwertung von Klärschlamm besteht schließlich in der Vergärung in Biogasanlagen. Als zentraler Nachteil ist jedoch hier die zu geringe Ausbeute an Biogas und somit der zu geringe Wirkungsgrad des Verfahrens zu nennen.

Die WO 2007/147181 A1 beschreibt ein Verfahren und eine Anlage zur Verarbeitung von Feuchtgut, insbesondere Klärschlamm, mit mehreren Trocknungsstufen, wobei zumindest ein Hochtemperaturtrockner und zumindest ein Niedertemperaturtrockner vorgesehen sind, und wobei die Abwärme des zumindest einen Hochtemperaturtrockners zur Beheizung des zumindest einen Niedertemperaturtrockners verwendet wird. Jeder der beiden Trockner wird dabei über einen eigenen Wärmeträgerkreislauf, insbesondere Thermalölkreislauf, mit Prozesswärme versorgt. Bei der in Fig. 3 der WO 2007/147181 A1 dargestellten Variante wird Feuchtgut, insbesondere Klärschlamm, zunächst dem Niedertemperaturtrockner zugeführt. Der teilgetrocknete Klärschlamm (Granulat) wird anschließend in den Hochtemperaturtrockner geführt.

Ausgehend von diesem Stand der Technik liegt der Erfindung die Aufgabe zugrunde, ein Verfahren und eine Anlage zur Verwertung von biogener Masse, insbesondere von Klärschlamm, anzugeben, welches bzw. welche mit hohem Wirkungsgrad bezogen auf den Energiegehalt der eingebrachten biogenen Masse in Relation zum durch die Verwertung erzeugten Energie betrieben werden kann.

Erfindungsgemäß wird diese Aufgabe durch ein Verfahren mit dem Merkmalen des Anspruchs 1 gelöst.

Der besondere Vorteil des erfindungsgemäßen Verfahrens besteht darin, dass durch die Nutzung der Abwärme der nachgeordneten Trocknerstufe als Nutzwärme in der vorgeordneten Trocknerstufe insgesamt die für die erforderliche Trocknung der biogenen Masse aufzubringende Energie minimiert werden kann, so dass die beispielsweise bei einer Verbrennung des in der Pyrolyse gewonnenen Pyrolysegases gewonnene Energie deutlich über der für die Trocknung der biogenen Masse aufzuwendenden Energie liegt, was bei vergleichbaren Verfahren des Standes der Technik bisher nicht möglich war. Berechnungen der Anmelderin haben in diesem Zusammenhang gezeigt, dass eine Energierückgewinnung aus biogener Masse bezogen auf ihren Energiegehalt im Umfang von bis zu 80% möglich ist.

Ferner ist ein Vorteil des erfindungsgemäßen Verfahrens, dass es vollständig dezentral betrieben werden kann, indem beispielsweise die biogene Masse in der Nähe des Ortes ihres Entstehens - im Falle von Klärschlamm also in der Nähe eines Klärwerks - getrocknet und pyrolysiert werden kann, wobei gegebenenfalls das Pyrolysegas anschließend in einer Brennstoffzelle oder in einer mit einem Generator verbundenen Wärmekraftmaschine, beispielsweise einer Gasturbine, einem Verbrennungsmotor oder einem Stirlingmotor, zur Erzeugung elektrischer Energie verwendet werden kann. Im Falle des Einsatzes in einem Blockheizkraftwerk kann neben elektrischer Energie auch noch Nutzwärme gewonnen werden, so dass das erfindungsgemäße Verfahren auch im Hinblick auf die angestrebte vermehrte Nutzung von Kraft-Wärme-Kopplung von Bedeutung ist.

Erfindungsgemaß wird jede der wenigstens zwei Trocknerstufen über einen eigenen Wärmeträgerkreislauf, insbesondere einen Thermalölkreislauf, mit Prozesswärme versorgt. Praktisch kann somit die Abwärme der nachgeordneten Trocknerstufe, insbesondere in Form von Brüden, d.h. in Form eines Dampf-Luft-Gemisches, durch einen in den Wärmeträgerkreislauf der vorgeordneten Trocknerstufe integrierten Wärmetauscher geleitet werden, um sie erfindungsgemäß als Prozesswärme für die vorgeordnete Trocknerstufer zu verwenden.Des Weiteren wird erfindungsgemäß die warme des im Pyrolysereaktor erzeugten heißen Pyrolysegases als Prozesswärme in der vorgeordneten Trocknerstufe und/oder in der nachgeordneten Trocknerstufe eingesetzt werden. Somit kann der hohe thermische Energiegehalt des Pyrolysegases den dem Pyrolysereaktor vorgeordneten Trocknerstufen als Prozesswärme zugeführt werden, wodurch die Effizienz des Gesamtprozesses weiter erhöht wird.Ferner wird erfindungsgemäß das im Pyrolysereaktor erzeugte Pyrolysegas einer Energiewandlereinheit zur Umsetzung des Energiegehalts des Pyrolysegases in elektrische Energie zugeführt. Als Energiewandlereinheit kommt dabei eine Brennstoffzelle, die den chemischen Energiegehalt des Pyrolysegases unmittelbar in elektrische Energie umwandelt, ebenso in Betracht wie eine einen Generator antreibende Wärmekraftmaschine, insbesondere eine Gasturbine, ein Verbrennungsmotor oder ein Stirlingmotor.Nach einer weiteren vorteilhaften Ausgestaltung der Erfindung ist vorgesehen, dass ein Teil des im Pyrolysereaktor erzeugten Pyrolysegases als Brennstoff für den Brenner eines in den Wärmeträgerkreislauf der vorgeordneten und/oder der nachgeordneten Trocknerstufe integrierten Kessels, insbesondere eines Thermalölkessels, verwendet wird. Der Kessel ist dabei bevorzugt im Wärmeträgerkreislauf der nachgeordneten Trocknerstufe angeordnet und die Abgase des Kesselbrenners werden dann durch einen in den Wärmeträgerkreislauf der vorgeordneten Trocknerstufe integrierten Wärmetauscher geleitet. Hierbei wird also in besonders effizienter Weise der Energiegehalt des abgezweigten Pyrolysegases für beide der wenigstens zwei Trocknerstufen verwendet.

Bevorzugt umfassen die wenigstens zwei Trocknerstufen wenigstens einen Niedertemperaturtrockner als vorgeordnete Trocknerstufe und wenigstens einen Hochtemperaturtrockner als nachgeordnete Trocknerstufe. In diesem Fall wird also in einem kaskadierten Trocknungsprozess die Abwärme der Hochtemperaturstufe der Niedertemperaturstufe als Prozesswärme zur Verfügung gestellt und damit im System, d.h. im Eigenprozess, nutzbar gemacht. Dabei versteht es sich, dass neben einer Niedertemperaturstufe und einer Hochtemperaturstufe weitere Trocknerstufen hinzutreten können, so dass auch eine Trocknerkaskade aus einer Vielzahl von Trocknerstufen gebildet werden kann, bei denen bevorzugt die jeweils nächsthöhere und in Transportrichtung des zu trocknenden Gutes nachgeordnet angeordnete Trocknerstufe ihre Abwärme der vorgeordneten Trocknerstufe oder den vorgeordneten Trocknerstufen mit niedrigerer Temperatur als Prozesswärme zur Verfügung stellt.

Nach einer weiteren Ausgestaltung der Erfindung wird zusätzlich die Wärme der Abgase des den Pyrolysereaktor befeuernden Stützbrenners als Prozesswärme in der vorgeordneten Trocknerstufe und/oder der nachgeordneten Trocknerstufe verwendet. Hierbei wird also das der Erfindung zugrunde liegende Prinzip dahingehend erweitert, dass auch die Abwärme des Pyrolysereaktors, die sich auch gegenüber einer Hochtemperaturtrocknerstufe noch auf einem deutlich höheren Temperaturniveau befindet, einer oder mehreren Trocknerstufen als Prozesswärme zur Verfügung gestellt wird. Verallgemeinert ausgedrückt wird somit in einer Kaskade von Prozessstufen ansteigender Temperatur die Abwärme einer nachgeordneten Prozessstufe als Prozesswärme den vorgeordneten Prozessstufen niedrigerer Temperatur als Prozesswärme zur Verfügung gestellt.

Im Falle einer Wärmekraftmaschine kann nach einer weiteren Ausgestaltung der Erfindung zur weiteren Steigerung der Prozesseffizienz die Wärme der Abgase der Wärmekraftmaschine als Prozesswärme in der vorgeordneten Trocknerstufe und/oder der nachgeordneten Trocknerstufe verwendet werden.

Wird im Falle einer mit dem Pyrolysegas betriebenen Wärmekraftmaschine die Abwärme ihrer Abgase als Prozesswärme für die vorgeordnete Trocknerstufe und/oder die nachgeordnete Trocknerstufe verwendet, so kann dies praktisch dadurch erfolgen, dass die Abgase der Wärmekraftmaschine durch einen in den Wärmeträgerkreislauf der jeweiligen Trocknerstufe integrierten Abgaswärmetauscher geleitet werden. Speziell ist es möglich, die Abgase zunächst durch einen in den Wärmeträgerkreislauf der nachgeordneten Trocknerstufe integrierten Wärmeabgaswärmetauscher zu leiten, woraufhin diese anschließend durch einen in den Wärmeträgerkreislauf der vorgeordneten Trocknerstufe integrierten Wärmetauscher geleitet werden.

Die aus einer Trocknerstufe abströmenden Brüden können auch für diese Trocknerstufe selbst zumindest teilweise die erforderliche Prozesswärme liefern, indem zumindest ein Teil der Brüden unter Zuführung von Energie zunächst verdichtet, dabei erwärmt und anschließend in einem in den Wärmeträgerkreislauf der jeweiligen Trocknerstufe integrierten Wärmetauscher kondensiert wird, wobei die Kondensationsenthalpie an den Wärmeträgerkreislauf abgegeben wird und das Wärmeträgermedium erwärmt. Hierbei wird also die Abwärme der Trocknerstufe nach Art einer Wärmepumpe durch Verdichtung auf ein höheres Temperaturniveau gehoben und anschließend als Nutzwärme über einen als Kondensator fungierenden Wärmetauscher wieder in den die Trocknerstufe mit Prozesswärme versorgenden Wärmeträgerkreislauf eingespeist.

Weiterhin kann vorgesehen sein, dass ein Teil des im Pyrolysereaktor erzeugten Pyrolysegases als Brennstoff für den Stützbrenner des Pyrolysereaktors selbst verwendet wird. Hierdurch kann das System im Wesentlichen unabhängig von weiteren Brennstoffen betrieben werden.

Ferner kann vorgesehen sein, dass der bei der Pyrolyse des getrockneten Gutes entstehende Pyrolysekoks einem Vergaser zugeführt wird und das dort durch Vergasung produzierte Schwachgas dem Stützbrenner für den Pyrolysereaktor als Brennstoff zugeführt wird. Dies stellt eine weitere Möglichkeit dar, die Prozesseffizienz zu erhöhen, indem nämlich in der Regel ungenutzte Pyrolyseprodukte, vorliegend der Pyrolysekoks, unmittelbar in dem Verfahren energetisch genutzt werden.

Vorrichtungsmäßig wird die eingangs genannte Aufgabe durch eine Anlage mit dem Merkmalen des Patentanspruchs 15 gelöst.

Im Hinblick auf die Vorteile der erfindungsgemäßen Anlage gilt das vorstehend Gesagte entsprechend.

Im Folgenden wird die Erfindung anhand einer ein Ausführungsbeispiel darstellenden Zeichnung näher erläutert. Es zeigen:
- Fig. 1: ein Blockschaltbild einer Anlage zur Erzeugung elektrischer Energie aus Klärschlamm,
- Fig. 2: ein Blockschaltbild des Niedertemperaturtrockners mit Thermalölkreislauf in einer bevorzugten Ausführungsform,
- Fig. 3: den Pyrolysereaktor der Anlage aus Fig. 1 in einer bevorzugten Ausführungsform und
- Fig. 4: ein Ablaufdiagramm zur Illustration eines Verfahrens zur Verwertung von Klärschlamm.

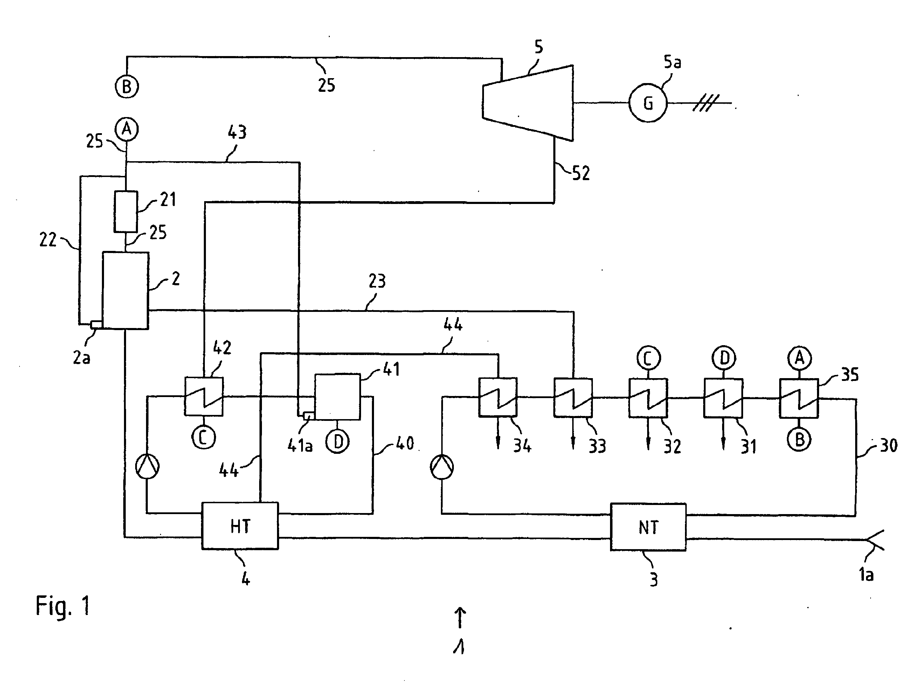

Die in Fig. 1 als Blockschaltbild schematisch dargestellte Anlage zur Erzeugung elektrischer Energie aus Klärschlamm als biogener Masse umfasst eine Trocknungsvorrichtung 1, durch die der an einem Aufgabepunkt 1a in die Anlage eingebrachte Klärschlamm transportiert und dabei getrocknet wird. Die Trocknungsvorrichtung gliedert sich auf in zwei Trocknerstufen, nämlich einen Niedertemperaturtrockner 3 und einen Hochtemperaturtrockner 4. Es können weitere Trocknerstufen hinzutreten (hier nicht dargestellt).

In Prozessrichtung hinter dem Hochtemperaturtrockner 4 ist ein Pyrolysereaktor 2 angeordnet, der von einem Stützbrenner 2a befeuert wird. Im Zuge der Pyrolyse wird der in der Trocknungsvorrichtung 1 getrocknete Klärschlamm thermisch zersetzt, wobei Pyrolysegas, (üblicherweise bestehend aus Stickstoff, Kohlendioxid, Wasserstoff, Kohlenmonoxid und höheren Kohlenwasserstoffen) und als weitere Produkte Pyrolysekoks und nicht weiter verwertbare Asche anfallen.

Das Pyrolysegas entweicht aus dem Pyrolysereaktor 2 über eine Leitung 25 und gelangt zu einer Wärmekraftmaschine, vorliegend einer Gasturbine 5, die ihrerseits mit einem Generator 5a zur Erzeugung elektrischer Energie verbunden ist. Anstelle einer Gasturbine kann auch ein Verbrennungsmotor, ein Stirlingmotor oder eine Brennstoffzelle, die die chemische Energie des Pyrolysegases unmittelbar in elektrische Energie umsetzt, vorgesehen sein.

Der Niedertemperaturtrockner 3 ebenso wie der Hochtemperaturtrockner 4 umfassen als einzelnen Trocknungsstufen der Trocknungsvorrichtung 1 jeweils einen Wärmeträgerkreislauf, vorliegend einen Thermalölkreislauf 30, 40, welcher die jeweilige Trocknerstufe 3, 4 mit Prozesswärme versorgt. Die Thermalölkreisläufe 30, 40 sind miteinander koppelbar (nicht in Fig. 1 dargestellt), was insbesondere bei der Inbetriebnahme der Anlage von Vorteil ist, um bis zur Erreichung eines stationären Betriebszustandes eine schnelle Trocknung des Klärschlammes zu erreichen.

Im Thermalölkreislauf 40 des Hochtemperaturtrockners 4 sind ein Thermalölkessel 41 zur Erhitzung des Thermalöls sowie ein Wärmetauscher 42 hintereinander angeordnet. Der Thermalölkessel 41 seinerseits umfasst einen Stützbrenner 41a, dessen Brennstoffzuführleitung 43 mit der Pyrolysegasleitung 25 verbunden ist. Entsprechend wird der Stützbrenner 41a unmittelbar mit dem im Pyrolysereaktor 2 erzeugten Pyrolysegas als Brennstoff betrieben. Im Wärmetauscher 42 wird das im Thermalölkreislauf 40 zirkulierende Thermalöl durch die über eine Abgasleitung 52 von der Gasturbine 5 abströmenden heißen Abgase zusätzlich aufgeheizt.

Im Thermalölkreislauf 30 des Niedertemperaturtrockners 3 sind vorliegend insgesamt fünf Wärmetauscher 31 bis 35 hintereinander angeordnet. Der Wärmetauscher 31 wird von den Abgasen des Brenners 41a des im Thermalölkreislauf 40 angeordneten Thermalölkessels 41 durchströmt. Die Restwärme des aus dem Wärmetauscher 31 ausströmenden Abgases entweicht als Verlustwärme. Der Wärmetauscher 32 wiederum wird von den Abgasen der Gasturbine 5 durchströmt, nachdem diese bereits den im Thermalölkreislauf 40 angeordneten Wärmetauscher 42 durchströmt haben. Der Übersichtlichkeit halber ist in Fig. 1 die Verbindung der Wärmetauscher 42, 32 lediglich durch die Symbole C-C angedeutet. Die Restwärme der Abgase der Gasturbine entweicht nach Durchströmen des Wärmetauschers 32, wobei sich das im Thermalölkreislauf 30 zirkulierende Thermalöl weiter aufheizt, wiederum als Verlustwärme.

Das Thermalöl des Thermalölkreislaufes 30 wird ferner durch die durch die Abgase des Stützbrenners 2a des Pyrolysereaktors 2 aufgeheizt. Hierzu strömen diese durch die Abgasleitung 23 und in den in die Leitung integrierten Wärmetauscher 33.

Ferner ist die Leitung 44, durch die die aus dem Hochtemperaturtrockner 4 austretenden Brüden strömen, mit dem Wärmetauscher 34 des Thermalölkreislaufs 30 verbunden, so dass die Brüden den Wärmetauscher 34 durchströmen und ihre Wärmeenergie teilweise an das Thermalöl abgeben.

Schließlich ist der Wärmetauscher 35 im Thermalölkreislauf 30 des Niedertemperaturtrockners 3 angeordnet. Dieser wird von den aus dem Pyrolysereaktor 2 ausströmenden heißen Pyrolysegasen durchströmt, wobei diese einen Teil ihrer Wärme an das Thermalöl abgeben.

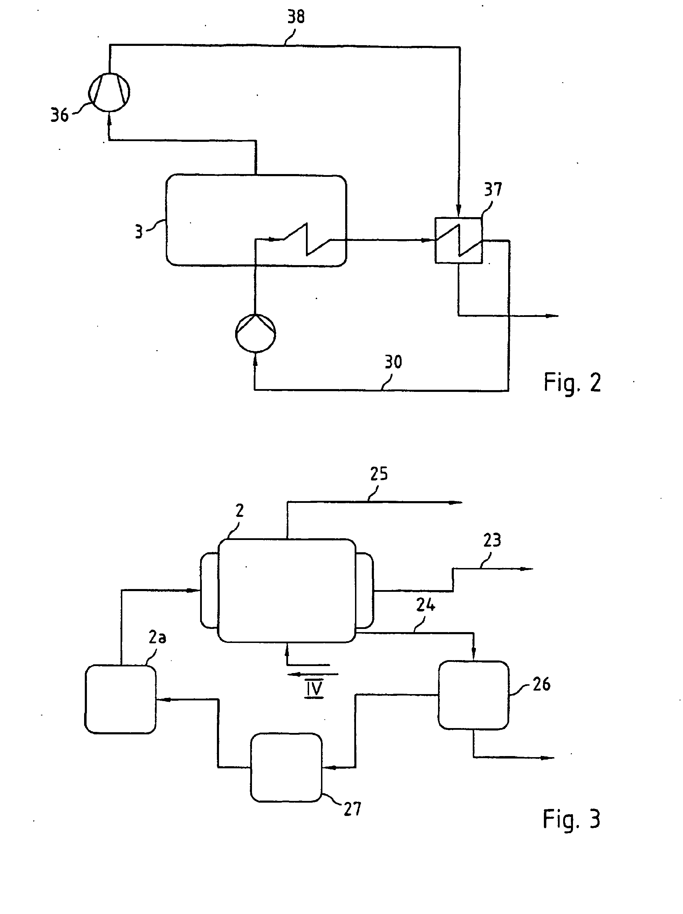

In Fig. 2 ist ein Blockschaltbild des Niedertemperaturtrockners 3 gemäß einer besonders bevorzugten Ausführungsform dargestellt. Hierzu ist in Thermalölkreislauf 30 des Niedertemperaturtrockners 3 ein weiterer Wärmetauscher 37 integriert. Der Übersichtlichkeit halber sind die vorstehend beschriebenen Wärmetauscher 31 bis 35 in Fig. 2 nicht dargestellt. Die aus dem Niedertemperaturtrockner 3 ausströmenden Brüden werden gemäß der Anordnung der Fig. 2 in einem Verdichter 36 verdichtet, wobei sie auf ein höheres Temperaturniveau angehoben werden, und strömen sodann als verdichteter Brüdenstrom durch die Leitung 38 in den Wärmetauscher 37, welcher als Kondensationswärmetauscher fungiert. Entsprechend werden die Brüden beim Durchströmen des Wärmetauschers 37 verflüssigt, wobei die Kondensationswärme an das in dem Thermalölkreislauf 30 zirkulierende Thermalöl abgegeben wird. Durch diesen dem Funktionsprinzip einer Wärmepumpe grob entsprechenden Aufbau kann durch das Aufwenden zusätzlicher Energie im Verdichter in sehr effizienter Weise weitere Prozesswärme für den Trocknungsprozess im Niedertemperaturtrockner 3 bereitgestellt werden.

In Fig. 3 ist in Form eines weiteren Blockschaltbilds der Pyrolysereaktor 2 der Anlage aus Fig. 1 in einer besonders bevorzugten Ausführungsform dargestellt. Die bereits aus dem Blockschaltbild der Fig. 1 bekannten Komponenten tragen entsprechende Bezugszeichen. Die Besonderheit der in Fig. 3 dargestellten Anordnung besteht nun darin, dass der im Zuge der Pyrolyse anfallende Pyrolysekoks durch eine Leitung 24 aus dem Reaktor ausgebracht und einer Vergaserstufe 26 zugeführt wird, wo der Pyrolysekoks in aus dem Stand der Technik an sich bekannter Weise vergast wird. Das dabei entstehende Schwachgas wird in einer Reinigungsstufe 27 gereinigt und sodann dem Stützbrenner 2a des Pyrolysereaktors 2 als zusätzlicher Brennstoff zugeführt. Hierdurch wird die Effizienz des Gesamtverfahrens weiter erhöht, da weitere Pyrolyseprodukte, vorliegend der Pyrolysekoks, als Energiequelle im Prozess genutzt wird.

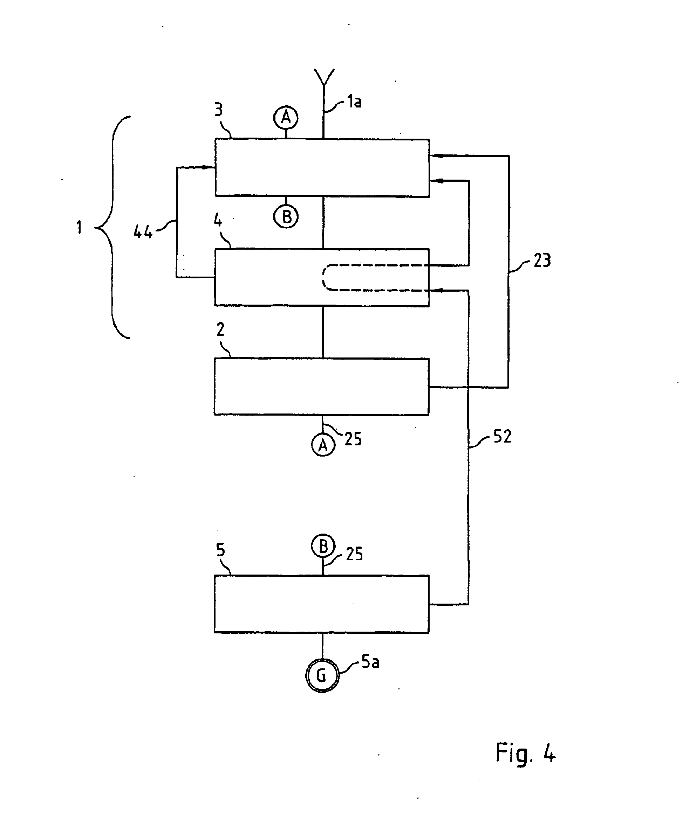

Im Zusammenhang mit Fig. 1 und dem schematischen Ablaufdiagramm der Fig. 4 wird nun das in der Anlage der Fig. 1 ablaufende Verfahren zur Erzeugung elektrischer Energie aus Klärschlamm näher erläutert:
In einem ersten Schritt wird der zu trocknende Klärschlamm mit einem Trockensubstanzgehalt von üblichen ca. 25% - die restlichen 75 Gew.-% werden durch Wasser gebildet -, in die Anlage aufgegeben und in den Niedertemperaturtrockner 3 transportiert und vorgetrocknet. Dort wird er so weit getrocknet, dass er nach Verlassen des Niedertemperaturtrockners 3 einen Trockensubstanzgehalt von ca. 40% aufweist. Der Niedertemperaturtrockner 3 wird dabei durch den Thermalölkreislauf 30 mit der notwendigen Prozesswärme versorgt. Im Anschluss wird das vorgetrocknete Gut in den Hochtemperaturtrockner 4 gefördert und bis zum endgültigen Trocknungsgrad getrocknet. Die im Hochtemperaturtrockner 4 produzierten Brüden werden dabei über die Leitung 44 in den im Thermalölkreislauf 30 des Niedertemperaturtrockners 3 vorgesehenen Wärmetauscher 34 geleitet, wo sie einen Teil ihrer Wärme an das in dem Thermalölkreislauf 30 zirkulierende Thermalöl abgeben. Im Ergebnis wird somit die Abwärme der in Transportrichtung des Gutes nachgeordneten Trocknerstufe, nämlich die Abwärme des Hochtemperaturtrockners 4, als Prozesswärme für die vorgeordnete Trocknerstufe, d.h. den Niedertemperaturtrockner 3, eingesetzt.

Das auf einen Trockensubstanzgehalt von ca. 85% getrocknete Gut wird sodann in den Pyrolysereaktor 2 eingeleitet, wo das Gut bevorzugt in einem zweistufigen Pyrolyseprozess unter Sauerstoffabschluss thermisch zersetzt wird, wie an sich aus dem Stand der Technik bekannt. Die hierfür notwendige Wärme wird durch den Stützbrenner 2a erzeugt. Das hierbei erzeugte Brennerabgas wird über die Leitung 23 dem im Thermalölkreislauf 30 des Niedertemperaturtrockners 3 vorgesehenen Wärmetauscher 33 zugeführt, so dass auch die Wärme der Brennerabgase als Prozesswärme in einer Trocknerstufe, vorliegend im Niedertemperaturtrockner 3, eingesetzt wird.

Das im Pyrolysereaktor 2 erzeugte Pyrolysegas verlässt den Pyrolysereaktor 2 über die Leitung 25 und durchläuft zunächst einen Staubabscheider 21, wo im Pyrolysegasstrom noch enthaltene Stäube abgeschieden werden. Wie Fig. 1 zu entnehmen ist, strömt das Pyrolysegas im Anschluss durch den Wärmetauscher 35, so dass die Wärme des im Pyrolysereaktor 2 erzeugten Pyrolysegases wiederum als Prozesswärme dieser Trocknerstufe zugeführt wird.

Vor Durchlaufen des Wärmetauschers 35 werden Teile des Pyrolysegasstromes aus der Leitung 25 in die Leitungen 22, 43 abgezweigt. Das in die Leitung 22 eingeleitete Pyrolysegas wird als Brennstoff zum Befeuern des Stützbrenners 2a des Pyrolysereaktors 2 eingesetzt, während der in die Leitung 43 eingeleitete Anteil als Brennstoff dem Stützbrenners 41a des im Thermalölkreislauf 40 des Hochtemperaturtrockners 4 angeordneten Thermalölkessels 41 zugeführt wird. Somit wird in besonders effizienter Weise die in dem im Pyrolysereaktor 2 erzeugten Pyrolysegas enthaltene chemische Energie zur Aufrechterhaltung des Gesamtprozesses eingesetzt.

Das durch die Leitung 25 strömende Pyrolysegas wird sodann in die Gasturbine 5 eingeleitet und dort verbrannt, wobei die Gasturbine 5 einen Generator 5a antreibt. Die Abgase der Gasturbine werden durch die Leitung 52 dem im Thermalölkreislauf 40 des Hochtemperaturtrockners 4 angeordneten Wärmetauscher 42 und im Anschluss daran dem im Thermalölkreislauf 30 des Niedertemperaturtrockners 3 angeordneten Wärmetauscher 32 zugeführt, so dass die im Abgas der Gasturbine enthaltene Wärme wiederum als Prozesswärme beiden Trocknerstufen 3, 4 zur Verfügung gestellt wird.

Mit dem vorstehend beschriebenen Verfahren wird somit das Prinzip verwirklicht, in einem mehrstufigen Prozess mit jeweils ansteigender Prozesstemperatur die Abwärme eines Prozessschrittes bestimmter Temperatur einem oder mehreren vorgeordneten Prozessschritten niedrigerer Temperatur als Prozesswärme zur Verfügung zu stellen, um insgesamt die Effizienz des Gesamtprozesses zu steigern.

## Patentansprüche

1. Verfahren zur Verwertung von biogener Masse, insbesondere von Klärschlamm, bei dem das zu verwertende Gut zunächst getrocknet und anschließend zum Zwecke der Erzeugung von Pyrolysegas in einem Pyrolysereaktor (2) thermisch zersetzt wird,
**dadurch gekennzeichnet, dass** das Gut in wenigstens zwei hintereinander angeordneten Trocknerstufen (3, 4) thermisch getrocknet wird, wobei die Abwärme der in Transportrichtung des Gutes nachgeordneten Trocknerstufe (4) als Prozesswärme für die jeweils vorgeordnete Trocknerstufe (3) verwendet wird, wobei jede der wenigstens zwei Trocknerstufen (3, 4) über einen eigenen Wärmeträgerkreislauf (30, 40) mit Prozesswärme versorgt wird, wobei die Wärme des im Pyrolysereaktor (2) erzeugten Pyrolysegases als Prozesswärme in der vorgeordneten Trocknerstufe (3) und/oder in der nachgeordneten Trocknerstufe (4) eingesetzt wird, wobei das im Pyrolysereaktor (2) erzeugte Pyrolysegas einer Energiewandlereinheit (5) zur Umsetzung des Energiegehalts des Pyrolysegases in elektrische Energie zugeführt wird, und wobei ein Teil des im Pyrolysereaktor (2) erzeugten Pyrolysegases als Brennstoff für einen Brenner (41a) eines in den Wärmeträgerkreislauf (40) der vorgeordneten und/oder der nachgeordneten Trocknerstufe (3, 4) integrierten Kessels (41) verwendet wird.

2. Verfahren nach Anspruch 1,
**dadurch gekennzeichnet, dass** die wenigstens zwei Trocknerstufen (3, 4) wenigstens einen Niedertemperaturtrockner (3) als vorgeordnete Trocknerstufe und wenigstens einen Hochtemperaturtrockner (4) als nachgeordnete Trocknerstufe umfassen.

3. Verfahren nach Anspruch 1 oder 2,
**dadurch gekennzeichnet, dass** die Wärme der Abgase des den Pyrolysereaktor (2) befeuernden Stützbrenners (2a) als Prozesswärme in der vorgeordneten Trocknerstufe (3) und/oder der nachgeordneten Trocknerstufe (4) eingesetzt wird.

4. Verfahren nach einem der Ansprüche 1 bis 3,
**dadurch gekennzeichnet, dass** die Energiewandlereinheit (5) eine Brennstoffzelle ist.

5. Verfahren nach einem der Ansprüche 1 bis 3,
**dadurch gekennzeichnet, dass** die Energiewandlereinheit eine mit einem Generator (5a) verbundene Wärmekraftmaschine, insbesondere eine Gasturbine (5), ein Verbrennungsmotor oder ein Stirlingmotor, ist.

6. Verfahren nach Anspruch 5,
**dadurch gekennzeichnet, dass** die Wärme der Abgase der Wärmekraftmaschine (5) als Prozesswärme in der vorgeordneten Trocknerstufe (3) und/oder der nachgeordneten Trocknerstufe (4) verwendet wird.

7. Verfahren nach einem der Ansprüche 1 bis 6,
**dadurch gekennzeichnet, dass** der eigene Wärmeträgerkreislauf (30, 40) der jeweiligen Trocknerstufe (3, 4) ein Thermalölkreislauf ist.

8. Verfahren nach einem der Ansprüche 1 bis 7,
**dadurch gekennzeichnet, dass** die Abwärme der nachgeordneten Trocknerstufe (4), insbesondere in Form von Brüden, durch einen in den Wärmeträgerkreislauf (30) der vorgeordneten Trocknerstufe (3) integrierten Wärmetauscher (34) geleitet wird.

9. Verfahren nach einem der Ansprüche 1 bis 8,
**dadurch gekennzeichnet, dass** bei wenigstens einer der wenigstens zwei Trocknerstufen (3, 4) zumindest ein Teil der aus der Trocknerstufe (3) austretenden Brüden zunächst verdichtet und anschließend in einem in den Wärmeträgerkreislauf (30) der jeweiligen Trocknerstufe (3) integrierten Wärmetauscher (37) kondensiert wird, wobei die Kondensationsenthalpie an den Wärmeträgerkreislauf abgegeben wird.

10. Verfahren nach einem der Ansprüche 1 bis 9,
**dadurch gekennzeichnet, dass** der in den Wärmeträgerkreislauf (40) der vorgeordneten und/oder der nachgeordneten Trocknerstufe (3, 4) integrierte Kessel (41) ein Thermalölkessel ist.

11. Verfahren nach einem der Ansprüche 1 bis 10,
**dadurch gekennzeichnet, dass** der Kessel (41) im Wärmeträgerkreislauf (40) der nachgeordneten Trocknerstufe (4) angeordnet ist und die Abgase des Kesselbrenners (41a) durch einen in den Wärmeträgerkreislauf (30) der vorgeordneten Trocknerstufe (3) integrierten Wärmetauscher (31) geleitet werden.

12. Verfahren nach einem der Ansprüche 1 bis 11 und 8,
**dadurch gekennzeichnet, dass** die Abgase der Wärmekraftmaschine (5) zunächst durch einen in den Wärmeträgerkreislauf (40) der nachgeordneten Trocknerstufe (4) integrierten Abgaswärmetauscher (42) geleitet werden, woraufhin sie anschließend durch einen in den Wärmeträgerkreislauf (30) der vorgeordneten Trocknerstufe (3) integrierten Wärmetauscher (32) geleitet werden.

13. Verfahren nach einem der Ansprüche 1 bis 12,
**dadurch gekennzeichnet, dass** ein Teil des im Pyrolysereaktor (2) erzeugten Pyrolysegases als Brennstoff für einen Stützbrenner (2a) des Pyrolysereaktors (2) verwendet wird.

14. Verfahren nach einem der Ansprüche 1 bis 13,
**dadurch gekennzeichnet, dass** der bei der Pyrolyse des getrockneten Gutes entstehende Pyrolysekoks einem Vergaser (26) zugeführt wird und das dort durch Vergasung produzierte Schwachgas einem Stützbrenner (2a) für den Pyrolysereaktor (2) als Brennstoff zugeführt wird.

15. Anlage zur Verwertung von biogener Masse, insbesondere von Klärschlamm, umfassend eine Trocknungsvorrichtung (1) und einen in Transportrichtung des Gutes hinter der Trocknungsvorrichtung angeordneten Pyrolysereaktor (2) zur Erzeugung von Pyrolysegas aus dem getrockneten Gut, **dadurch gekennzeichnet, dass** die Trocknungsvorrichtung (1) wenigstens zwei in Transportrichtung des Gutes hintereinander angeordnete Trocknerstufen (3, 4) umfasst, die einen Niedertemperaturtrockner (3) als vorgeordnete Trocknerstufe und einen Hochtemperaturtrockner (4) als nachgeordnete Trocknerstufe umfassen und derart miteinander gekoppelt sind, dass die Abwärme der in Transportrichtung des Gutes nachgeordneten Trocknerstufe (4) als Nutzwärme für die jeweils vorgeordnete Trocknerstufe (3) einsetzbar ist,
wobei die wenigstens zwei Trocknerstufen (3, 4) jeweils einen eigenen Thermalölkreislauf (30, 40) zur Versorgung mit Prozesswärme umfassen,
wobei die Thermalölkreisläufe (30, 40) miteinander koppelbar sind,
wobei die vorgeordnete Trocknerstufe (3) einen an einer Pyrolysegasleitung (25) des Pyrolysereaktors (2) angeschlossenen Wärmetauscher (35) umfasst,
wobei die Pyrolysegasleitung (25) in Prozessrichtung hinter dem Wärmetauscher (35) an einer Wärmekraftmaschine angeschlossen ist, die ihrerseits mit einem Generator (5a) zur Erzeugung elektrischer Energie verbunden ist,
wobei in Prozessrichtung vor dem an der Pyrölysegasleitung (25) angeschlossenen Wärmetauscher (35) eine Leitung (43) von der Pyrolysegasleitung (25) abzweigt, über die ein Teil des Pyrolysegases als Brennstoff für einen Stützbrenner (41a) eines in den Thermalölkreislauf (40) der nachgeordneten Trocknerstufe (4) integrierten Thermalölkessels (41) zur Erhitzung des Thermalöls zuführbar ist.

16. Blockheizkraftwerk mit einer Anlage nach Anspruch 15.

## Claims

1. Method for utilising biogenic mass, in particular sewage sludge, in which the material to be utilised is first dried and then thermally decomposed in a pyrolysis reactor (2) for the purposes of generating pyrolysis gas, **characterised in that** the material is thermally dried in at least two dryer stages (3, 4) arranged in succession, the waste heat of the dryer stage (4) arranged downstream in the direction of transport of material being used as process heat for the dryer stage (3) arranged upstream, wherein each of the at least two dryer stages (3, 4) is supplied with process heat via its own heat transfer circuit (30, 40), wherein the heat of the pyrolysis gas produced in the pyrolysis reactor (2) is used as process heat in the upstream dryer stage (3) and/or in the downstream dryer stage (4), wherein the pyrolysis gas produced in the pyrolysis reactor (2) is fed to an energy converter unit (5) for conversion of the energy content of the pyrolysis gas into electric energy, and wherein some of the pyrolysis gas produced in the pyrolysis reactor (2) is used as fuel for a burner (41a) of a boiler (41) integrated into the heat transfer circuit (40) of the upstream and/or downstream dryer stage (3, 4).

2. Method according to claim 1, **characterised in that** the at least two dryer stages (3, 4) comprise at least one low-temperature dryer (3) as an upstream dryer stage and at least one high-temperature dryer (4) as a downstream dryer stage.

3. Method according to either claim 1 or claim 2, **characterised in that** the heat of the waste gases of the auxiliary burner (2a) firing the pyrolysis reactor (2) is used as process heat in the upstream dryer stage (3) and/or the downstream dryer stage (4).

4. Method according to any one of claims 1 to 3, **characterised in that** the energy converter unit (5) is a fuel cell.

5. Method according to any one of claims 1 to 3, **characterised in that** the energy converter unit is a heat engine connected to a generator, in particular a gas turbine (5), a combustion engine or a Stirling engine.

6. Method according to claim 5, **characterised in that** the heat of the waste gases of the heat engine (5) are used as process heat in the upstream dryer stage (3) and/or in the downstream dryer stage (4).

7. Method according to any one of claims 1 to 6, **characterised in that** the own heat transfer circuit (30, 40) of the respective dryer stage (3, 4) is a thermal oil circuit.

8. Method according to any one of claims 1 to 7, **characterised in that** the waste heat of the downstream dryer stage (4), in particular in the form of exhaust vapours, is conveyed through a heat exchanger (34) integrated into the heat transfer circuit (30) of the upstream dryer stage (3).

9. Method according to any one of claims 1 to 8, **characterised in that**, in at least one of the at least two dryer stages (3, 4), at least some of the exhaust vapours exiting from the dryer stage (3) are first compressed and then condensed in a heat exchanger (37) integrated into the heat transfer circuit (30) of the respective dryer stage (3), wherein the condensation enthalpy is delivered to the heat transfer circuit.

10. Method according to any one of claims 1 to 9, **characterised in that** the boiler (41) integrated into the heat transfer circuit (40) of the upstream and/or downstream dryer stage (3, 4) is a thermal oil boiler.

11. Method according to any one of claims 1 to 10, **characterised in that** the boiler (41) is arranged in the heat transfer circuit (40) of the downstream dryer stage (4) and the waste gases of the boiler burner (41a) are guided through a heat exchanger (31) integrated into the heat transfer circuit (30) of the upstream dryer stage (3).

12. Method according to any one of claims 1 to 11 and 8, **characterised in that** the waste gases of the heat engine (5) are first guided through a waste gas heat exchanger (42) integrated into the heat transfer circuit (40) of the downstream dryer stage (4), whereupon they are then guided through a heat exchanger (32) integrated into the heat transfer circuit (30) of the upstream dryer stage (3).

13. Method according to any one of claims 1 to 12, **characterised in that** some of the pyrolysis gas produced in the pyrolysis reactor (2) is used as fuel for the auxiliary burner (2a) of the pyrolysis reactor (2).

14. Method according to any one of claims 1 to 13, **characterised in that** the pyrolysis coke produced during pyrolysis of the dried material is fed to a gasifier (26) and the lean gas produced there by gasification is fed as fuel to the auxiliary burner (2a) for the pyrolysis reactor (2).

15. System for utilising biogenic mass, in particular sewage sludge, comprising a dryer device (1) and a pyrolysis reactor (2) arranged after the dryer device in the direction of transport of the material for the production of pyrolysis gas from the dried material, **characterised in that** the dryer device (1) comprises at least two dryer stages (3, 4) which are arranged in succession in the direction of transport of the material and comprise at least one low-temperature dryer (3) as the upstream dryer stage and at least one high-temperature dryer (4) as the downstream dryer stage, and which are coupled to one another in such a way that the waste heat of the dryer stage (4) arranged downstream in the direction of transport of the material can be used as useful heat for the dryer stage (3) arranged upstream, wherein each of the at least two dryer stages (3, 4) comprises a own heat transfer oil circuit (30, 40) for supplying process heat, wherein the heat transfer oil circuits (30, 40) can be coupled to one another, wherein the upstream dryer stage (3) comprises a heat exchanger (35) connected to a pyrolysis gas conduit (25) of the pyrolysis reactor (2), wherein the pyrolysis gas conduit (25) is connected after the heat exchanger (35) in the process direction to a heat engine which is connected to a generator (5a) for generating electric energy, wherein ahead the heat exchanger (35) connected to the pyrolysis gas conduit (25) in the process direction a conduit (43) branches off form the pyrolysis gas conduit (25), via said conduit (43) some of the pyrolysis gas can be supplied as fuel for an auxiliary burner (41a) of a thermal oil boiler (41) integrated into the thermal oil circuit (40) of the downstream dryer stage (4) for heating the thermal oil.

16. Block-type thermal power plant comprising a system according to claim 15.

## Revendications

1. Procédé pour la valorisation de biomasse, en particulier de boues résiduelles, dans lequel la matière à utiliser est d'abord séchée et décomposée ensuite thermiquement, aux fins de fabrication de gaz de pyrolyse, dans un réacteur de pyrolyse (2), **caractérisé en ce que** la matière est séchée thermiquement dans au moins deux étages de séchage (3, 4), situés l'un derrière l'autre, sachant que la chaleur résiduelle de l'étage de séchage (4), situé en aval dans la direction de transport de la matière, est utilisée comme chaleur de processus pour l'étage de séchage (3) respectif, situé en amont, sachant que chacun des deux étage de séchage (3, 4), au moins prévus, est alimenté en chaleur de processus par l'intermédiaire de son propre circuit caloporteur (30, 40), la chaleur du gaz de pyrolyse, généré dans le réacteur de pyrolyse (2) étant utilisée, en tant que chaleur de processus dans l'étage de séchage (3), situé en amont, et / ou dans l'étage de séchage (4), situé en aval, sachant que le gaz de pyrolyse, généré dans le réacteur de pyrolyse (2), est conduit à une unité de conversion d'énergie (5) pour convertir l'énergie, présente dans le gaz de pyrolyse, en énergie électrique, et sachant qu'une partie du gaz de pyrolyse, généré dans le réacteur de pyrolyse (2), est utilisé comme combustible pour un brûleur (41a) d'une chaudière (41), qui est intégrée dans le circuit caloporteur (40) de l'étage de séchage situé en amont et / ou de l'étage de séchage situé en aval (3, 4).

2. Procédé selon la revendication 1, **caractérisé en ce que** les deux étages de séchage (3, 4) au moins prévus comprennent au moins un séchoir à basse température (3), en tant qu'étage de séchage situé en amont, et au moins un séchoir à haute température (4), en tant qu'étage de séchage situé en aval.

3. Procédé selon la revendication 1 ou 2, **caractérisé en ce que** la chaleur des gaz d'échappement du brûleur auxiliaire (2a), qui chauffe le réacteur de pyrolyse (2), est utilisée en tant que chaleur de processus dans l'étage de séchage situé en amont (3) et / ou dans l'étage de séchage (4) situé en aval.

4. Procédé selon l'une des revendications 1 à 3, **caractérisé en ce que** l'unité de conversion d'énergie (5) est une cellule de combustible.

5. Procédé selon l'une des revendications 1 à 3, **caractérisé en ce que** l'unité de conversion d'énergie est une machine thermique, en particulier une turbine à gaz (5), un moteur à combustion interne ou un moteur Stirling, qui est reliée à un générateur (5a).

6. Procédé selon la revendication 5, **caractérisé en ce que** la chaleur des gaz d'échappement de la machine thermique (5) est utilisée en tant que chaleur de processus dans l'étage de séchage situé en amont (3) et / ou dans l'étage de séchage (4) situé en aval.

7. Procédé selon l'une des revendications 1 à 6, **caractérisé en ce que** le propre circuit caloporteur (30, 40) de chaque étage de séchage (3, 4) est un circuit d'huile thermique.

8. Procédé selon l'une des revendications 1 à 7, **caractérisé en ce que** la chaleur résiduelle de l'étage de séchage (4) situé en aval est conduite, en particulier sous la forme de fumée, à travers un échangeur thermique (34), qui est intégré dans l'étage de séchage situé en amont (3).

9. Procédé selon l'une des revendications 1 à 8, **caractérisé en ce que**, dans au moins l'un des deux étages de séchage (3) au moins prévus, au moins une partie de la fumée en provenance de l'étage de séchage (3) est d'abord comprimée et ensuite condensée dans un échangeur thermique (37), qui est intégré dans le circuit caloporteur (30) de l'étage de séchage (3) respectif, sachant que l'enthalpie de condensation est conduite dans le circuit caloporteur.

10. Procédé selon l'une des revendications 1 à 9, **caractérisé en ce que** la chaudière, intégrée dans le circuit caloporteur (40) de l'étage de séchage situé en amont (3) et / ou de l'étage de séchage (4) situé en aval, est une chaudière à huile thermique.

11. Procédé selon l'une des revendications 1 à 10, **caractérisé en ce que** la chaudière (41) est installée dans le circuit caloporteur (40) de l'étage de séchage (4) situé en aval et que les gaz d'échappement du brûleur (41a) de la chaudière sont conduits à travers un échangeur thermique (31), qui est intégré dans le circuit caloporteur (30) de l'étage de séchage situé en amont (3).

12. Procédé selon l'une des revendications 1 à 11 et 8, **caractérisé en ce que** les gaz d'échappement de la machine thermique (5) sont d'abord conduits à travers un échangeur thermique (42), qui est intégré dans le circuit caloporteur (40) de l'étage de séchage situé en aval (4), ce après quoi ils sont conduits à travers un échangeur thermique (32), qui est intégré dans le circuit caloporteur (30) de l'étage de séchage situé en amont (3).

13. Procédé selon l'une des revendications 1 à 12, **caractérisé en ce qu'**une partie du gaz de pyrolyse, généré dans le réacteur de pyrolyse (2), est utilisé en tant que combustible pour un brûleur auxiliaire (2a) du réacteur de pyrolyse (2).

14. Procédé selon l'une des revendications 1 à 13, **caractérisé en ce que** le coke de pyrolyse, obtenu par la pyrolyse de la matière séchée, est conduit à un réacteur de gazéification (26) et que le gaz pauvre, y produit par gazéification, est conduit à un brûleur auxiliaire (2a), en tant que combustible pour le réacteur de pyrolyse (2).

15. Installation pour la valorisation de biomasse, qui comprend un dispositif de séchage (1) et un réacteur de pyrolyse (2), qui, disposé en aval du dispositif de séchage, dans la direction de transport de la matière, est destiné à générer du gaz de pyrolyse à partir de la matière séchée, **caractérisée en ce que** le dispositif de séchage (1) est doté d'au moins deux étages de séchage (3, 4), qui comprennent un séchoir à basse température (3), en tant qu'étage de séchage situé en amont, et un séchoir à haute température (4), en tant qu'étage de séchage situé en aval, et sont couplés ensemble de sorte que la chaleur résiduelle de l'étage de séchage (4) situé en aval dans la direction de transport de la matière puisse être utilisée en tant que chaleur utile pour l'étage de séchage (3) respectif, situé en amont, sachant que chacun des deux étages de séchage (3, 4) au moins prévus est doté de son propre circuit d'huile thermique (30, 40) pour l'alimentation en chaleur de processus,
sachant que les circuits d'huile thermique (30, 40) pouvant être couplés ensemble,
sachant que l'étage de séchage (4) situé en amont est doté d'un échangeur thermique (35), qui est raccordé à la conduite de gaz de pyrolyse (25) du réacteur de pyrolyse (2),
sachant que la conduite de gaz de pyrolyse (25) est raccordée, en aval de l'échangeur thermique (35) dans la direction de processus, à une machine thermique, qui, de son côté, est raccordée à un générateur (5a) pour la génération d'énergie électrique,
sachant que, dans la direction de traitement, en amont de l'échangeur thermique (35) raccordé à la conduite de gaz de pyrolyse (25), est branchée sur la conduite de gaz de pyrolyse (25), une conduite (43), par l'intermédiaire de laquelle une partie du gaz de pyrolyse peut être prélevée en tant que combustible pour un brûleur auxiliaire (41a) d'une chaudière à huile thermique (41), intégrée dans le circuit d'huile thermique (40) de l'étage de séchage (4) situé en aval, pour le chauffage de l'huile thermique.

16. Centrale thermique en montage-bloc avec une installation selon la revendication 15.
